# EUROPEAN PATENT APPLICATION

(11) **EP 2 093 609 A2**
(43) Date of publication of application: **26.08.2009**
(21) Application number: 09002339.1
(22) Date of filing: 19.02.2009
(51) Int. Cl.: G02F 1/1337

(54) **Substrate for liquid crystal display device and liquid crystal display device**

(30) Priority: 19.02.2008 JP 2008037518
(71) Applicant: FUJIFILM Corporation, Minato-ku Tokyo 106-0031 (JP)
(72) Inventor: Nakajima, Masao, Kanagawa 250-0193 (JP); Amimori, Ichiro, Kanagawa 250-0193 (JP)
(74) Representative: HOFFMANN EITLE

(57) **Abstract**

A substrate for liquid crystal display device which can provide a vertically-aligned (VA)-mode liquid crystal display device having a good viewing angle dependence of contrast and at the same time can keep the production process as simple as possible is provided: a substrate for liquid crystal display device having a smoothing layer, the smoothing layer being a negative uniaxial optically anisotropic layer having an optical axis in the direction normal to the substrate surface, particularly the substrate for liquid crystal display device having a color filter layer and/or an electrode, and the negative uniaxial optically anisotropic layer having an optical axis in the direction normal to the substrate surface being directly provided on the color filter layer or the electrode.

## Description

### TECHNICAL FIELD

The present invention relates to a substrate for liquid crystal display device and a liquid crystal display device. The present invention particularly relates a substrate for liquid crystal display device suitable for VA-mode liquid crystal display device.

### RELATED ART

A CRT (cathode ray tube) has been mainly employed in various display devices used for office automation (OA) equipment such as a word processor, a notebook-sized personal computer and a personal computer monitor, mobile phone terminal and television set. In recent years, a liquid crystal display device (LCD) has more widely been used in place of a CRT, because of its thinness, lightweight and low power consumption. A liquid crystal display device (LCD) usually comprises a liquid crystal cell and polarizing plates. The polarizing plate usually has protective films and a polarizing film, and is obtained typically by dying a polarizing film composed of a polyvinyl alcohol film with iodine, stretching the film, and laminating the film with the protective films on both surfaces. A transmissive liquid crystal display device usually comprises polarizing plates on both sides of a liquid crystal cell, and occasionally comprises one or more optical compensation films. A reflective liquid crystal display device usually comprises a reflector plate, a liquid crystal cell, one or more optical compensation films, and a polarizing plate in this order. A liquid crystal cell comprises liquid-crystalline molecules, two substrates encapsulating the liquid-crystalline molecules, and electrode layers applying voltage to the liquid-crystalline molecules. The liquid crystal cell switches ON and OFF displays depending on variation in orientation state of the liquid-crystalline molecules, and is applicable both to transmission type and reflective type, of which display modes ever proposed include TN (twisted nematic), VA (vertically aligned), IPS (in-plane switching), FFS(fringe field switching), OCB (optically compensatory bend), ECB (electrically controlled birefringence), and STN(super twisted nematic). Color and contrast displayed by the conventional liquid crystal display device, however, vary depending on the viewing angle. Therefore, it cannot be said that the viewing angle characteristics of the liquid crystal display device is superior to those of the CRT.

In order to improve the viewing angle characteristics, optical compensation films for viewing-angle optical compensation have been used. There have been proposed various LCDs, employing a mode and an optical compensation film having an appropriate optical property for the mode, excellent in contrast characteristics without dependency on viewing angles. Particularly, OCB, VA or IPS modes have achieved a wide-viewing mode, and LCDs employing such a mode can give a good contrast characteristic in all around view. In recent years, LCDs employing such a mode become widely used as a home screen having a wide screen of over 40 inches.

Among them, VA mode is now most widely used as LCD mode, because it enables wide viewing angle by applying an optical compensation film for viewing-angle optical compensation, as well as it provides frontal display characteristics as excellent as that of TN mode. In VA mode, wider viewing angle can be achieved by using both of uniaxially oriented retardation plate having positive refractive-index anisotropy in the direction of film surface (positive a-plate) and optically negative uniaxial retardation plate having an optical axis in the direction vertical to film surface (negative c-plate), (pages 12 and 13, and Fig. 54 of Japanese Laid-Open Patent Publication "Tokkai" Heisei No. 10-153802).

However, as the optical compensation film for practical use is attached to a polarizing plate via an adhesive agent in a manner that a specific angle is formed between the optical axes of the film and the plate, reduction of contrast derived from interfacial reflection is likely to occur at the interface of the adhesive agent which has smaller refractive index than that of polarizing plate or optical compensation film. In addition, due to the characteristic of the optical compensation films that is likely to cause dimensional changes with environmental temperature or humidity, corner non-uniformity of LCD is considered as a problem.

The publication SID'06 21.1 discloses a positive c-plate that is used for IPS-mode liquid crystal display device, and allowed to function as a smoothing layer. Further, the positive c-plate is used in combination with a positive a-plate to obtain an additional desirable optical compensation function.

However, a similar technology has not been reported for a VA-mode liquid crystal display device, which is a mainstream liquid crystal display device at present.

### SUMMARY OF THE INVENTION

An object of the present invention is to provide a substrate for liquid crystal display device which can provide a vertically-aligned (VA)-mode liquid crystal display device having a good viewing angle dependence of contrast and at the same time can keep the production process as simple as possible, and a liquid crystal display device which is produced by using the substrate for liquid crystal display device.

The inventors of the present invention conducted intensive research. As a result, they found that light leakage is significantly reduced when a negative c-plate optically anisotropic layer is provided on an uneven (convex-concave) substrate, compared with when a positive a-plate optically anisotropic layer is provided on the uneven substrate. They thus found that, for obtaining a good viewing angle dependence of contrast by using a positive a-plate optically anisotropic layer and a negative c-plate optically anisotropic layer, the negative c-plate optically anisotropic layer can be used as a smoothing layer before a formation of the positive a-plate optically anisotropic layer. The present invention was achieved based on the above findings.

The present invention thus provides the following [1] to [14].
[1] A substrate for liquid crystal display device comprising a smoothing layer,
   the smoothing layer being a negative uniaxial optically anisotropic layer having an optical axis in the direction normal to the substrate surface.
[2] The substrate for liquid crystal display device according to [1], comprising a color filter layer and/or an electrode, and
   the smoothing layer being formed directly on the color filter layer or the electrode.
[3] The substrate for liquid crystal display device according to [1] or [2],
   the optically anisotropic layer being a layer formed by coating with a solution comprising a liquid crystalline compound having a least one reactive group, and drying of the solution to thereby form a liquid crystal phase, and then applying heat to the liquid crystal phase or irradiating the liquid crystal phase.
[4] The substrate for liquid crystal display device according to [3],
   the liquid crystalline compound being a discotic liquid crystalline compound.
[5] The substrate for liquid crystal display device according to [3],
   the optically anisotropic layer comprising a polyimide material.
[6] The substrate for liquid crystal display device according to any one of [1] to [5], comprising a positive uniaxial optically anisotropic layer having an optical axis of in-plane direction of substrate surface.
[7] The substrate for liquid crystal display device according to [6],
   the positive uniaxial optically anisotropic layer being formed directly on the smoothing layer.
[8] The substrate for liquid crystal display device according to [6] or [7] comprising a color filter, and
   the positive uniaxial optically anisotropic layer having retardations in a patterned manner corresponding to colors indicated by the color filter.
[9] The substrate for liquid crystal display device according to any one of [6] to [8], the positive uniaxial optically anisotropic layer being a layer formed by coating with a solution comprising a liquid crystalline compound having a least one reactive group, and drying of the solution to thereby form a liquid crystal phase, and then applying heat to the liquid crystal phase or irradiating the liquid crystal phase.
[10] The substrate for liquid crystal display device according to [9],
   the reactive group being a radically polymerizable group or a cationically polymerizable group.
[11] The substrate for liquid crystal display device according to [9],
   the liquid crystalline compound having a least one radically polymerizable group and a least one cationically polymerizable group.
[12] The substrate for liquid crystal display device according to [10] or [11],
   the radically polymerizable group being selected from the group consisting of acrylic group and methacrylic group, and
   the cationically polymerizable group being selected from the group consisting of vinyl ether group, oxetanyl group, or epoxy group.
[13] A liquid crystal display device having the substrate for liquid crystal display device according to any one of [1] to [12].
[14] The liquid crystal display device according to [13], employing VA mode as a liquid crystal orientation mode.

### BRIEF DESCRIPTION OF THE DRAWINGS

Fig. 1 shows the result of the measurement of unevenness of the color filter substrate used in Examples.
Fig. 2 shows the result of the measurement of unevenness of the optically anisotropic substrate which was prepared in Examples and has an optically anisotropic layer on the color filter substrate shown in Fig. 1.

### DETAILED DESCRIPTION OF THE INVENTION

Paragraphs below will detail the present invention.

In the specification, ranges indicated with "to" mean ranges including the numerical values before and after "to" as the minimum and maximum values.

It is to be noted that, regarding angles, the term "substantially" in the context of this specification means that a tolerance of less than ±5° with respect to the precise angles can be allowed. Difference from the precise angles is preferably less than 4°, and more preferably less than 3°. It is also to be noted that the term "The Re value is substantially zero" in the context of the specification means that the Re value is not more than 5 nm. It is also to be noted that the term "visible light" in the context of the specification means light of a wavelength falling within the range from 400 to 700 nm.

The substrate for liquid crystal display device of the present invention is characterized in that it has a negative uniaxial optically anisotropic layer having an optical axis in the direction normal to the substrate surface. In the specification, "a negative uniaxial optically anisotropic layer having an optical axis in the direction normal to the substrate surface" may be referred to as "a negative c-plate optically anisotropic layer".

In the specification, each of "a substrate for liquid crystal display device" and "a substrate" is generally used in distinct meaning, unless otherwise specifically mentioned.

Paragraphs below will detail the substrate for liquid crystal display device of the present invention with respect to materials and processes. It is to be noted that the present invention is by no means limited to the embodiments below, and any other embodiments can be carried out referring to the description below and known methods, so that the present invention is not limited to the embodiment explained below.

### [Substrate]

The substrate used for the process of producing the substrate for liquid crystal display device of the present invention is not particularly limited as long as it is transparent. The substrate may be any of known glasses such as soda glass sheet having a silicon oxide film formed on the surface thereof, low-expansion glass, non-alkali glass, and silica glass; or a transparent substrate formed of polymer. Because it is used in the substrate for liquid crystal display device, the substrate is preferred to have heat-resistance to be able to resist the high temperature during drive of liquid crystal. As such substrate having heat-resistance, glass sheet, polyimide, polyether sulfone, heat-resisting polycarbonate, or polyethylene naphthalate is preferred. Glass sheet is particularly preferred from the viewpoint of price, transparency, and heat-resistance. The substrate can be improved in the adhesiveness with the adhesive layer for transfer by being preliminarily subjected to a coupling treatment. The coupling treatment is preferably carried out by using the method described in Japanese Laid-Open Patent Publication "Tokkai" No. 2000-39033. The thickness of the substrate is preferably 100 to 1200µm in general, most preferably 300 to 1000µm, although being not specifically limited.

### [Optically Anisotropic Layer]

The optically anisotropic layer is not specifically limited so far as the layer gives a retardation, which is not substantially zero, for a light incoming in at least one direction, that is, the layer has an optical characteristic not understood as being isotropic. The layer is preferably formed by ultraviolet curing of a liquid crystal layer comprising at least one species of liquid crystalline compound, from the viewpoint that the optical characteristics can readily be controlled. The optical characteristics of the optically anisotropic layer can be controlled in a preferable range by, for example, types of the liquid crystalline compound, types or amount of the orientation agent to be mixed, types of the alignment layer and rubbing treatment condition of the alignment layer, or the radiation condition of ultraviolet rays. The thickness of the optically anisotropic layer is preferably 0.1 to 20µm, more preferably 0.5 to 10µm. The following will describe an optically anisotropic layer which is formed by a composition containing a liquid crystalline compound.

### [Liquid Crystalline Compound]

The liquid-crystalline compounds can generally be classified by molecular geometry into rod-like one and discotic one. Each category further includes low-molecular type and high-molecular type. The high-molecular type generally refers to that having a degree of polymerization of 100 or above ("Kobunshi Butsuri-Soten'i Dainamikusu (Polymer Physics-Phase Transition Dynamics), by Masao Doi, p.2, published by Iwanami Shoten, Publishers, 1992).

In the present invention, a positive a-plate optically anisotropic layer is preferably formed of a composition containing a rod-like liquid-crystalline compound. A negative c-plate optically anisotropic layer is preferably formed of a composition containing a discotic liquid-crystalline compound or a composition containing a rod-like liquid-crystalline compound and a chiral agent.

As the composition containing a liquid crystalline compound, a curable liquid crystalline composition is preferable, which has advantages that temperature- and moisture-dependent changes can be reduced because the layer can be cured by polymerization reaction. For this reason, the aforementioned composition preferably contains a polymerizable component having a reactive group or the like. The liquid crystalline compound per se may be polymerizable, or a polymerizable monomer may be added separately. It is preferred that the liquid crystalline compound per se is polymerizable. More preferably, the aforementioned composition contains at least one liquid crystalline compound having two or more reactive groups a single molecule. The liquid-crystalline compound may be a mixture of two or more compounds, wherein at least one of the compounds preferably has two or more reactive groups. The liquid crystalline compound does not need to exhibit liquid crystallinity in the final form in the optically anisotropic layer. For example, in the optically anisotropic layer, the liquid crystalline compound having a reactive group capable of thermal reaction or photo reaction under heating or under irradiation of light may no longer exhibit liquid crystallinity by polymerization or crosslinking reaction by heat or light to form a high-molecular weight compound.

As a liquid crystalline compound for a preparation of a positive uniaxial optically anisotropic layer, preferable examples include azomethine compounds, azoxy compounds, cyanobiphenyl compounds, cyanophenyl esters, benzoate esters, cyclohexanecarboxylic acid phenyl esters, cyanophenylcyclohexane compounds, cyano-substituted phenylpyrimidine compounds, alkoxy-substituted phenylpyrimidine compounds, phenyldioxane compounds, tolan compounds and alkenylcyclohexylbenzonitrile compounds. Further, rod-like liquid-crystalline compounds represented by the following formula (I) are particularly preferred. In formula (I), Q¹ and Q² respectively represent a reactive group. L¹, L², L³ and L⁴ respectively represent a single bond or a divalent linking group, and it is preferred that at least one of L³ and L⁴ represents -O-CO-O-. A¹ and A² respectively represent a C₂₋₂₀ spacer group. M represents a mesogen group.

Formula (I):Q¹-L¹-A¹-L³-M-L⁴-A²-L²-Q²

The a liquid crystalline compound represented by the above formula (I) for a preparation of a positive uniaxial optically anisotropic layer will be further explained in detail as below. In formula (I), Q¹ and Q² respectively represent a reactive group. The polymerization reaction of the reactive group is preferably addition polymerization (including ring opening polymerization) or condensation polymerization. In other words, the reactive group is preferably a functional group capable of addition polymerization reaction or condensation polymerization reaction. Examples of reactive groups are shown below. 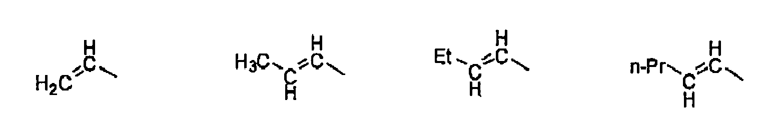 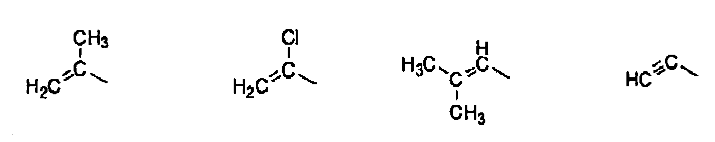 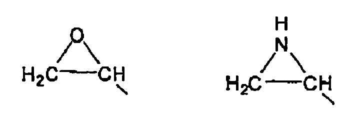 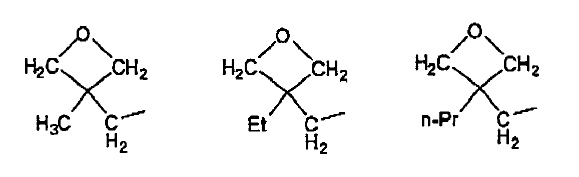 ― SH ―OH ―NH₂

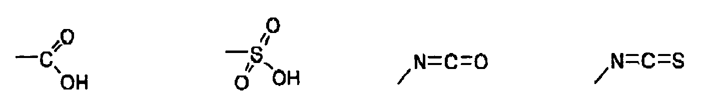

As the divalent linking group represented by L¹, L², L³ or L⁴, a divalent linking group selected from the group consisting of -O-, -S-, -CO-, -NR²-, -CO-O-, -O-CO-O-, -CQ-NR²-, -NR²-CO-, -O-CO-, -O-CO-NR²-, -NR²-CO-O- and -NR²-CO-NR²- is preferred. R² represents a C₁₋₇ alkyl group or hydrogen atom. At least one of L³ and L⁴ represents -O-CO-O- (carbonate group). It is preferred that, in formula (I) , Q¹-L¹ and Q²-L²- are independently CH₂=CH-CO-O-, CH₂=C(CH₃) -CO-O- or CH₂=C(Cl) -CO-O-CO-O-; and it is more preferred they are independently CH₂=CH-CO-O-.

In the formula, A¹ and A² preferably represent independently a C₂₋₂₀ spacer group. It is more preferred that they independently represent a C₂₋₁₂ alkylene group, a C₂₋₁₂ alkenylene group or a C₂₋₁₂ alkynylene group, and much more preferred that they independently represent a C₂₋₁₂ alkylene group. The spacer group is preferably selected from chain groups and may contain at least one unadjacent oxygen or sulfur atom. And the spacer group may have one or more substituent such as a halogen atom (fluorine, chlorine or bromine atom), cyano, methyl or ethyl.

Examples of the mesogen represented by M include any known mesogen groups. The mesogen groups represented by a formula (II) are preferred.

Formula (II): -(-W¹-L⁵)ₙ-w²-

In the formula, W¹ and W² independently represent a divalent cyclic alkylene group, a cyclic alkenylene group, a divalent aryl group or a divalent hetero-cyclic group; and L⁵ represents a single bond or a linking group. Examples of the linking group represented by L⁵ include those exemplified as examples of L¹ to L⁴ in the formula (I) and -CH₂-O- and -O-CH₂-. In the formula, n represents 1, 2 or 3.

Examples of W¹ and W² include 1,4-cyclohexanediyl, 1,4-phenylene, pyrimidine-2,5-diyl, pyridine-2,5-diyl, 1,3,4-thiazole-2,5-diyl, 1,3,4-oxadiazole-2,5-diyl, naphtalene-2,6-diyl, naphtalene-1,5-diyl, thiophen-2,5-diyl, pyridazine-3,6-diyl. 1,4-cyclohexanediyl has two stereoisomers, cis-trans isomers, and the trans isomer is preferred. W¹ and W² may respectively have one or more substituents. Examples the substituent include a halogen atom such as a fluorine, chlorine, bromine or iodine atom; cyano; a C₁₋₁₀ alkyl group such as methyl, ethyl and propyl; a C₁₋₁₀ alkoxy group such as methoxy and ethoxy; a C₁₋₁₀ acyl group such as formyl and acetyl; a C₂₋₁₀ alkoxycarbonyl group such as methoxy carbonyl and ethoxy carbonyl; a C₂₋₁₀ acyloxy group such as acetyloxy and propionyloxy; nitro, trifluoromethyl and difluoromethyl.

Preferred examples of the basic skeleton of the mesogen group represented by the formula (II) include, but not to be limited to, these described below. And the examples may have one or more substituents selected from the above.

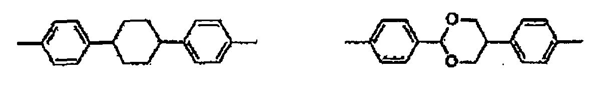

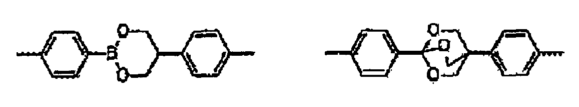

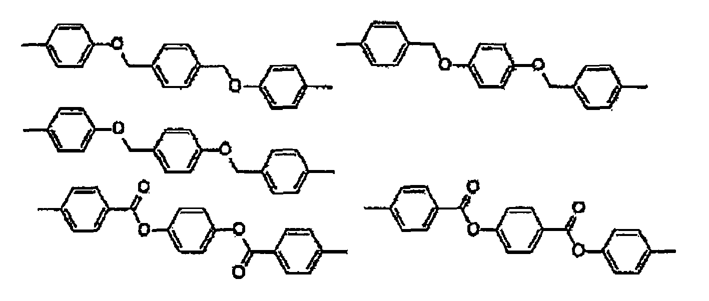

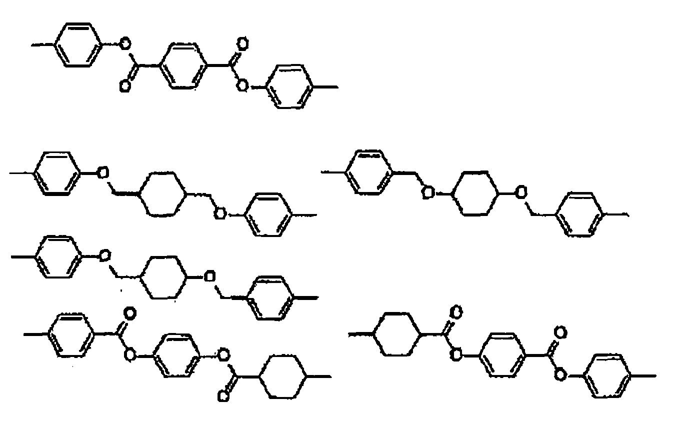

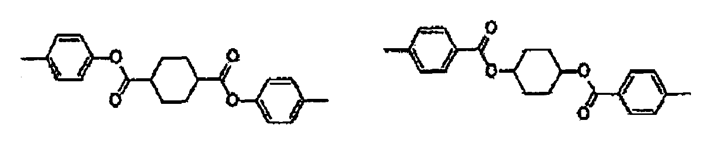

Examples the compound represented by the formula (I) include, but not to be limited to, these described below. The compounds represented by the formula (I) may be prepared according to a method described in a gazette of Tokkohyo No. hei 11-513019 or WO97/00600.

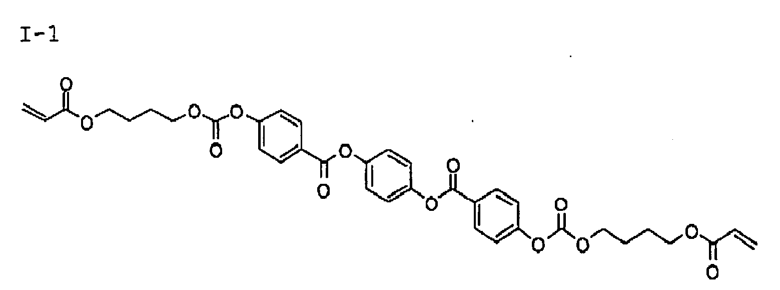

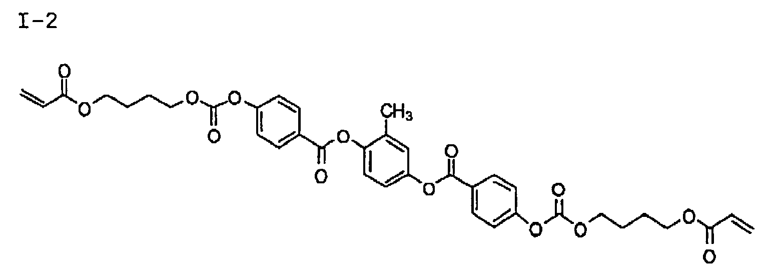

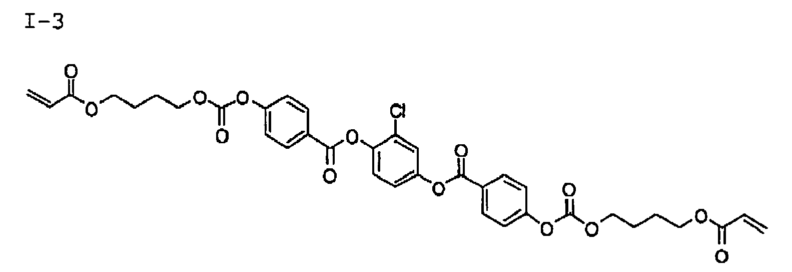

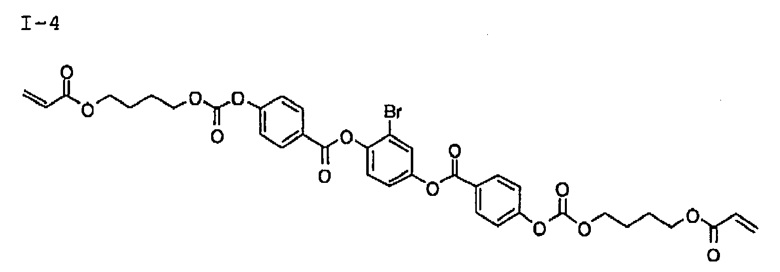

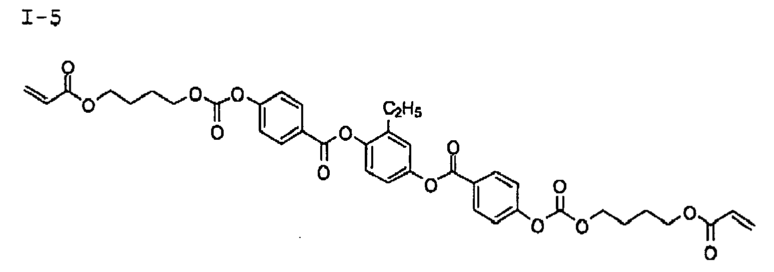

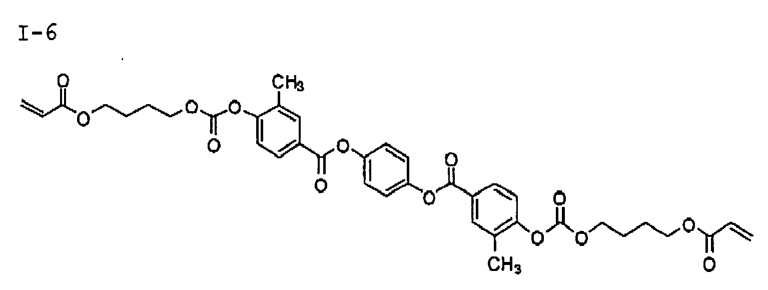

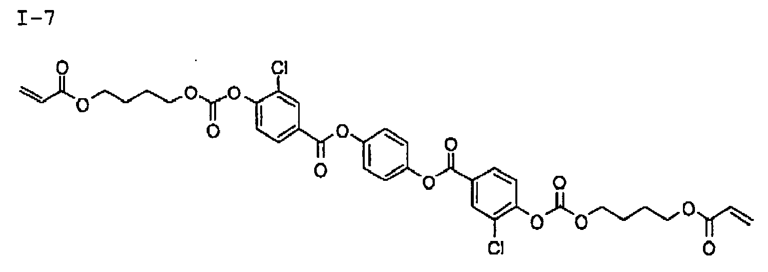

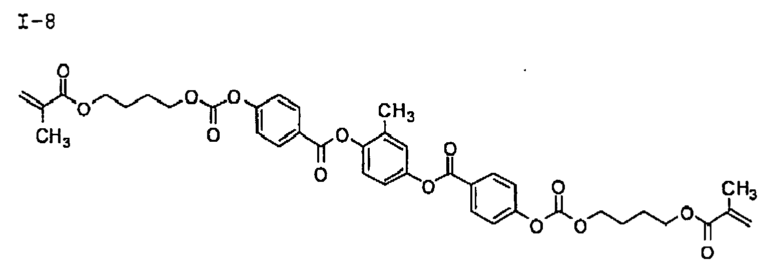

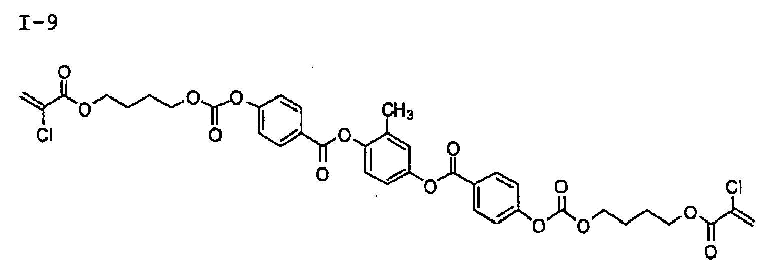

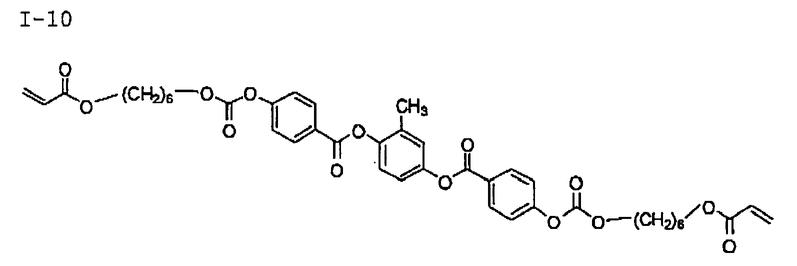

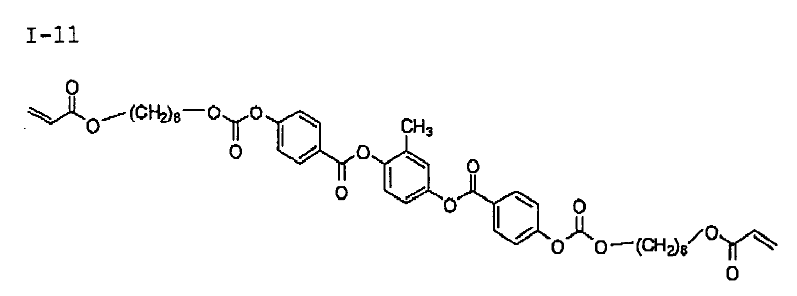

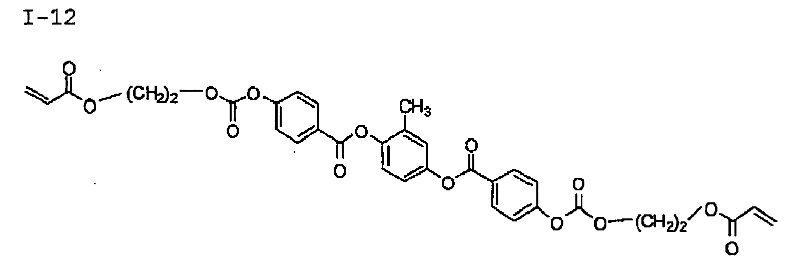

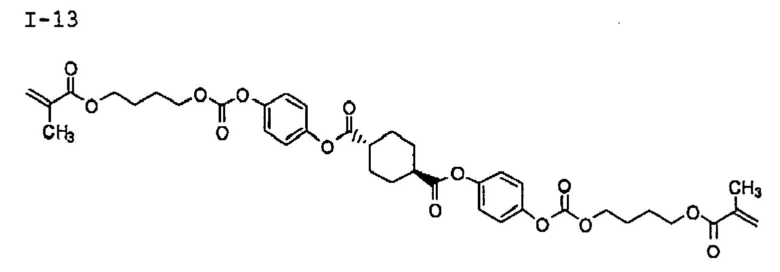

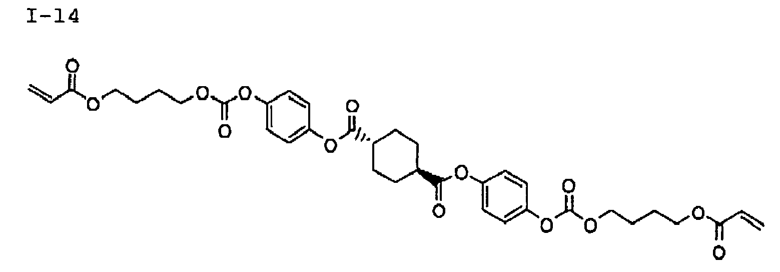

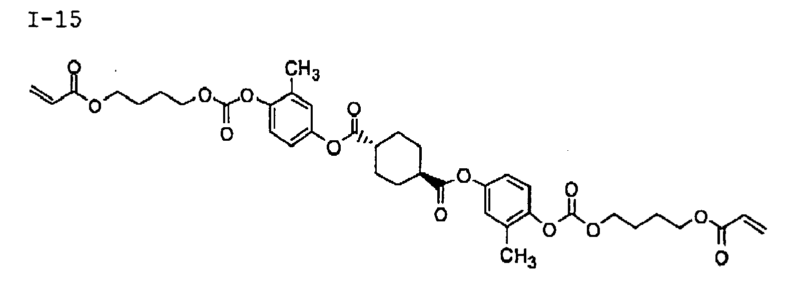

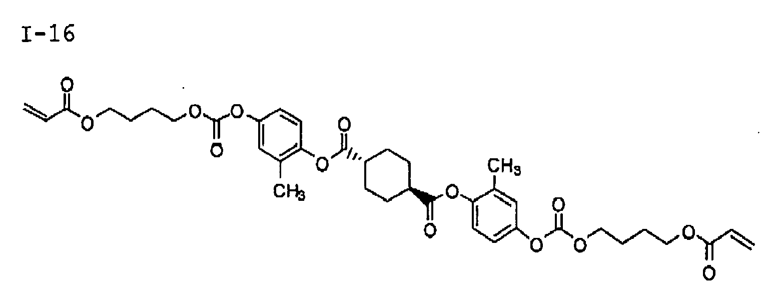

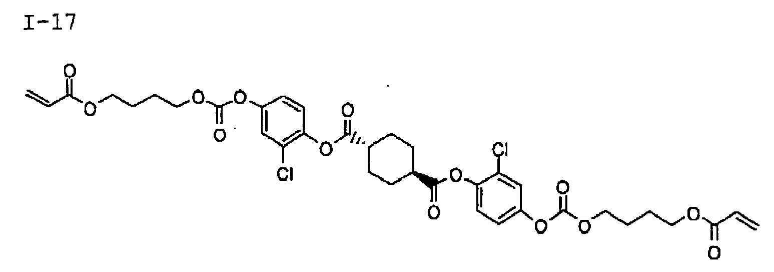

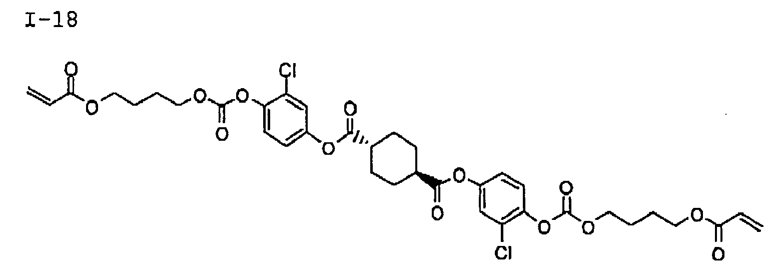

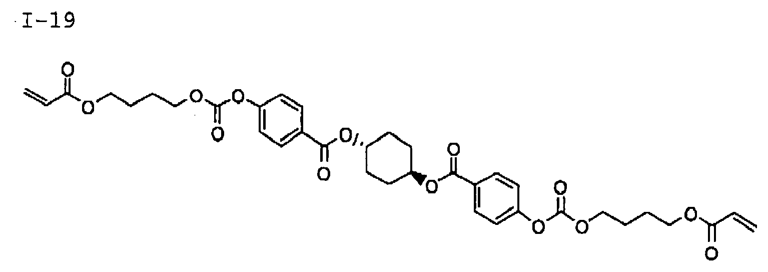

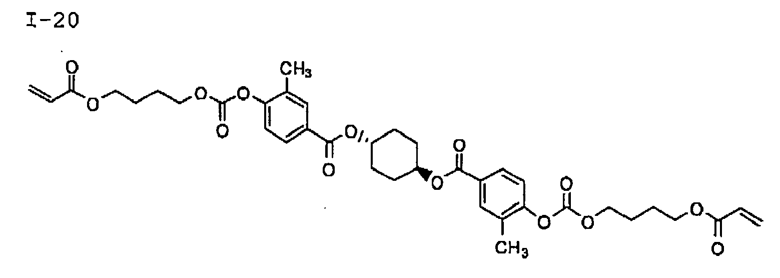

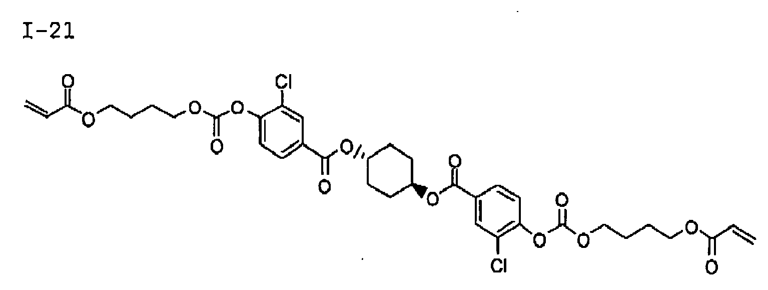

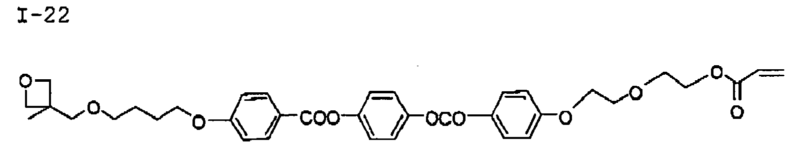

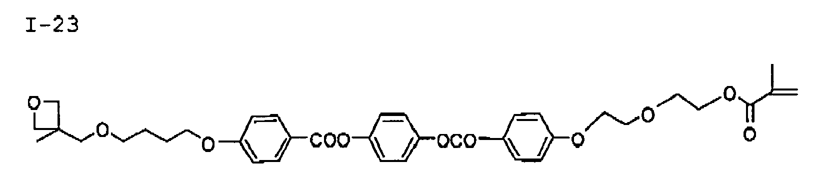

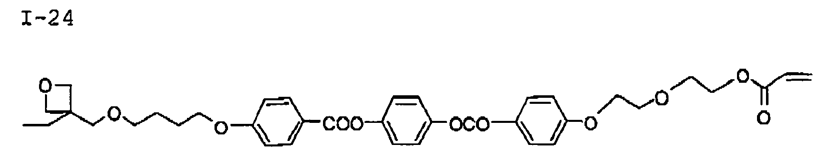

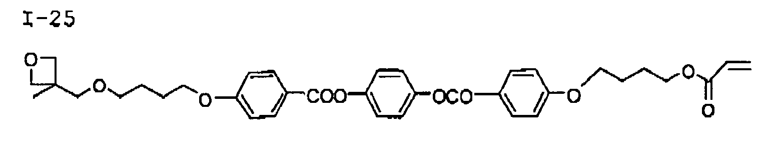

### [Negative Uniaxial Optically Anisotropic Layer]

Examples of a compound for a preparation of a negative uniaxial optically anisotropic layer include discotic liquid-crystalline compounds, a polyimide material, and precursor of the polyimide material.

Examples of the polyimide material include a polyimide, a polyisoimide, a polyesterimide, a polyetherimide, and a polyamideimide. Examples of the polyimide material also include a polyamide acid, a polyamide acid ester, a polyamide, a polyamine, a polythioamide, a polyurethane, a polyurea, and polyazomethine, each of which has similar properties to those of the above examples of polyimide material.

### [Discotic Liquid-crystalline Compound]

Examples of the discotic liquid-crystalline compound include benzene derivatives described in C. Destrade et al., Mol. Cryst., Vol. 171, p.111 (1981); torxene derivatives described in C. Destrade et al., Mol. Cryst., Vol. 122, p.141 (1985) and Physics Lett., A, Vol. 78, p.82 (1990); cyclohexane derivatives described in B. Kohne et al., Angew. Chem., Vol. 96, p.70 (1984); and azacrown-base or phenylacetylene-base macrocycles described in J. M. Lehn, J. Chem. Commun., p.1794 (1985) and in J. Zhang et al., J. Am. Chem. Soc., Vol. 116, p.2655 (1994). The above mentioned discotic (disk-like) compounds generally have a discotic core in a central portion and groups (L) radiating from the core such as linear alkyl or alkoxy groups or substituted banzoyloxy groups, and exhibits liquid crystallinity. When such molecules are aligned uniformly, the aggregate of the aligned molecules exhibits an optically negative uniaxial property, although any limitation is intended.

According to the present invention, it is preferred that the discotic liquid-crystalline compound is selected from the formula (III) below:

Formula (III) :D(-L-P)ₙ

In the formula, D represents a discotic core, L represents a divalent linking group, P represents a polymerizable group, and n is an integer from 4 to 12.

Preferred examples of the discotic core (D), the divalent linking group (L) and the polymerizable group (P) are respectively (D1) to (D15), (L1) to (L25) and (P1) to (P18) described in Japanese Laid-Open Patent Publication (Tokkai) No. 2001-4837; and the descriptions in the publication regarding the discotic core (D), the divalent linking group (L) and the polymerizable group (P) may be preferably applicable to this embodiment.

Preferred examples of the discotic compound are shown below.

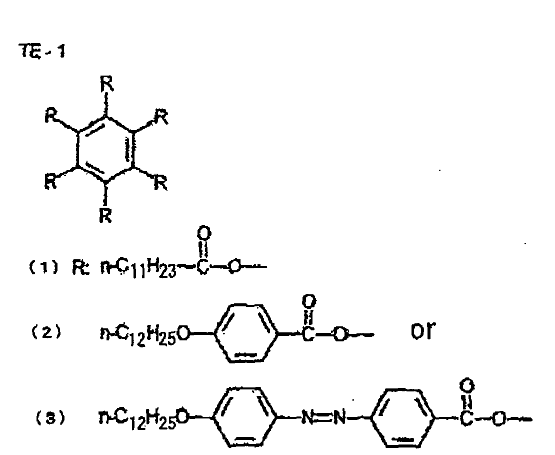

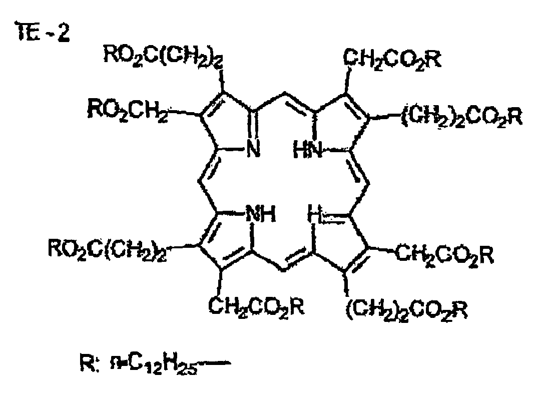

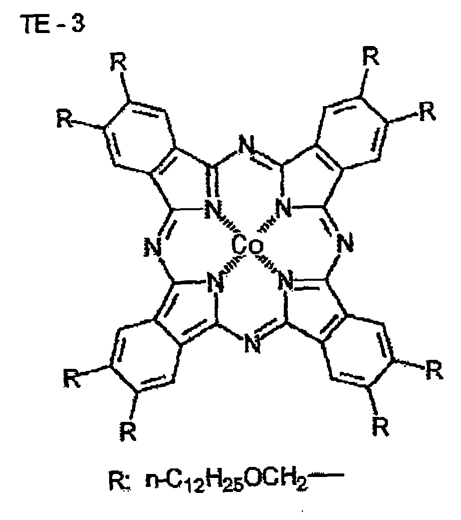

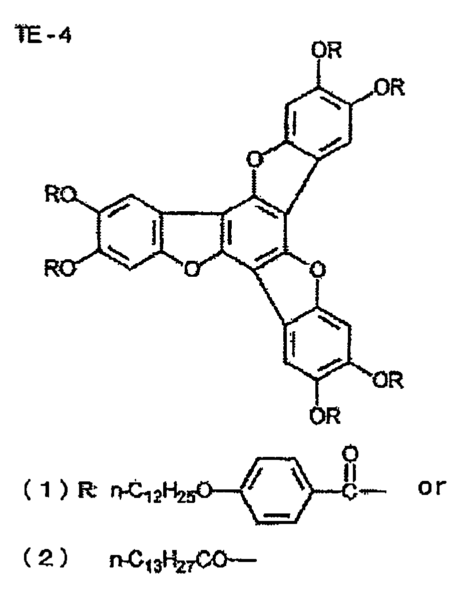

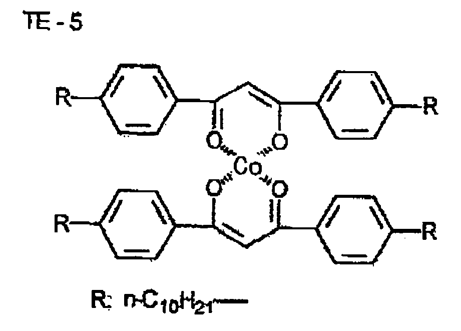

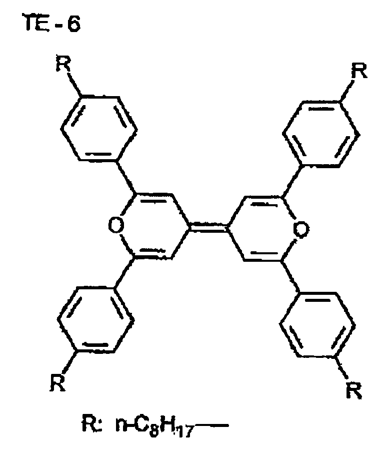

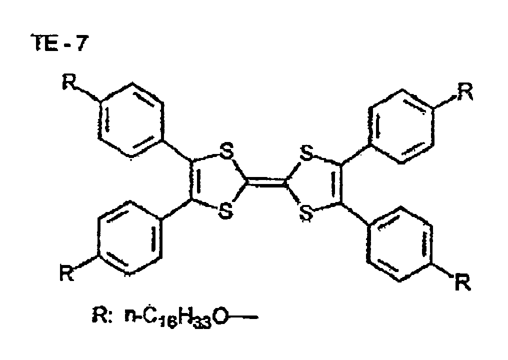

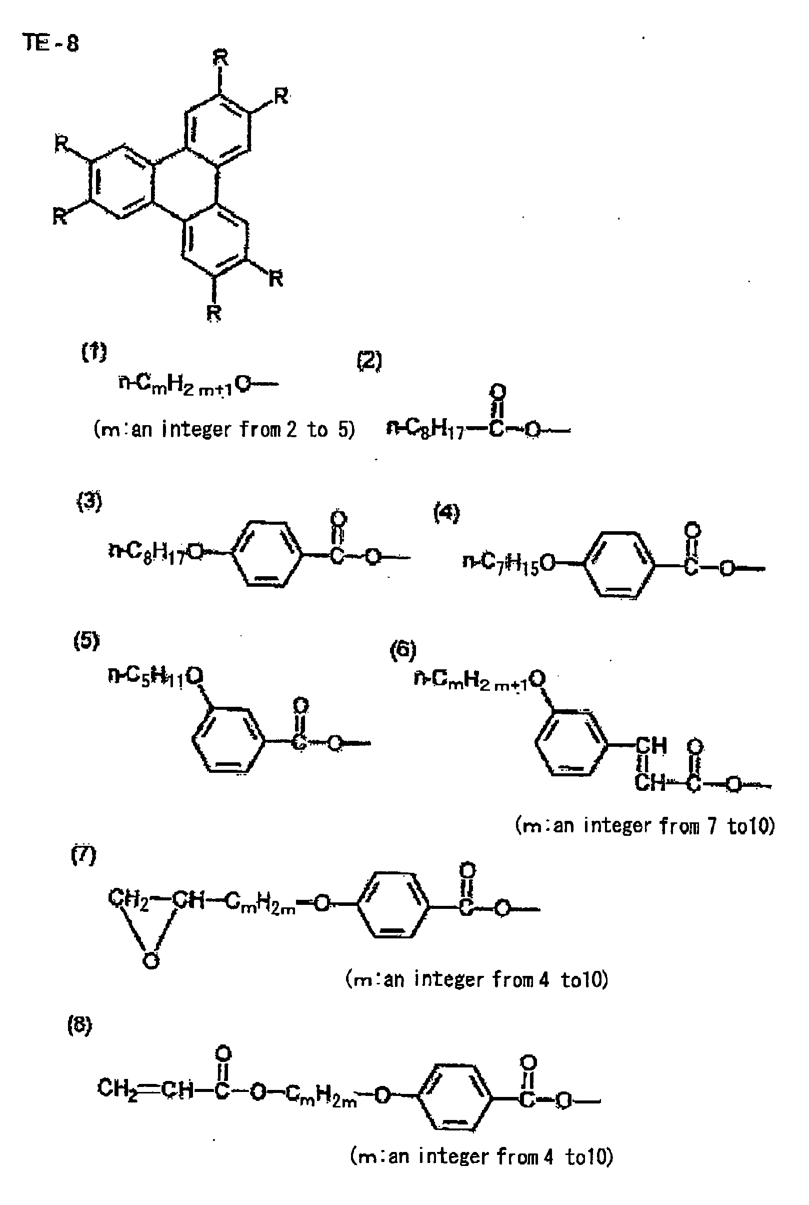

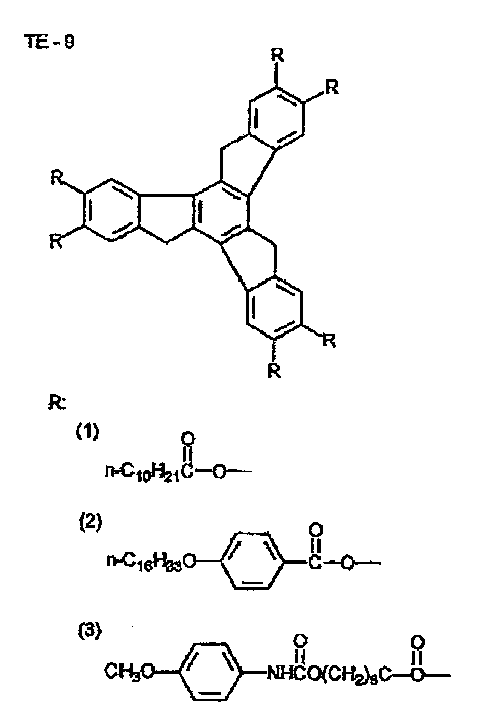

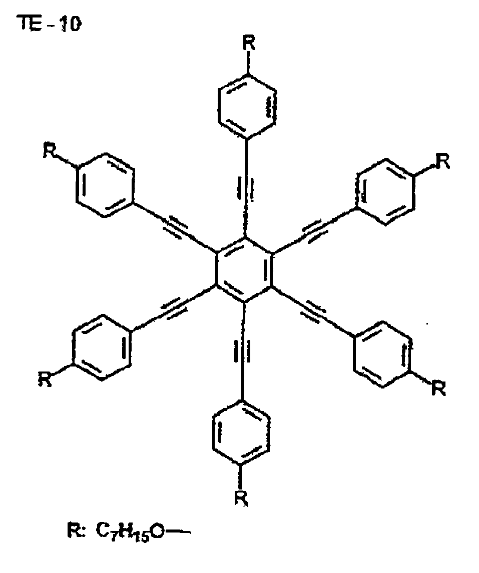

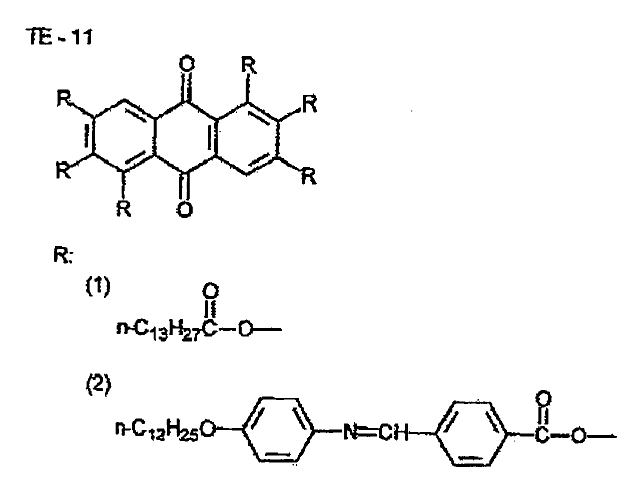

### [Negative uniaxial optically anisotropic layer having an optical axis in the direction normal to substrate surface]

When a negative c-plate optically anisotropic layer is prepared from a composition containing a liquid crystal compound, the negative c-plate optically anisotropic layer can be obtained by applying the composition containing a liquid crystal compound, preferably the aforementioned discotic liquid crystal compound, to the surface of a substrate which may have one or more other layer formed thereon, maturing the composition to allow the liquid crystalline molecules to align at a liquid crystal phase forming temperature, heating or light-irradiating the liquid crystal phase without disordering the above obtained alignment state. For example, when a discotic liquid crystal compound having a polymerizable group is used, homeotropic alignment state, wherein the optical axis of the discotic surface of the discotic molecules and the layer surface are perpendicular, can be fixed by heat or UV-light-irradiation without disordering the alignment state, and thereby an optical anisotropy can be obtained. The above composition containing a liquid crystal compound is particularly preferred to be directly applied on an uneven layer which needs to be smoothed. In that manner, the negative c-plate optically anisotropic layer obtained as above effectively functions as a smoothing layer.

### [Preparation of positive a-plate optically anisotropic layer]

The substrate for liquid crystal display device of the present invention is preferred to further have a positive uniaxial optically anisotropic layer having an optical axis of in-plane direction of substrate surface. In the specification, "a positive uniaxial optically anisotropic layer having an optical axis of in-plane direction of substrate surface" may be referred to as "a positive a-plate optically anisotropic layer".

Having a negative c-plate optically anisotropic layer and a positive a-plate optically anisotropic layer at the same time, the substrate for liquid crystal display device of the present invention can more preferably contribute to reducing viewing angle dependence of contrast when applied to a liquid crystal display device having VA-mode alignment mode of liquid crystal phase. When a positive a-plate optically anisotropic layer is prepared from a composition containing a liquid crystal compound, the optically anisotropic layer can be obtained by applying the composition containing a liquid crystal compound to the surface of a substrate which may have one or more other layer formed thereon, maturing the composition to allow the liquid crystalline molecules to align at a liquid crystal phase forming temperature, heating or light-irradiating the liquid crystal phase without disordering the above obtained alignment state, and thereby an optical anisotropy can be obtained.

A positive a-plate optically anisotropic layer is preferably provided on a negative c-plate optically anisotropic layer that functions as a smoothing layer.

### [Horizontal orientation agent]

At least one compound selected from the group consisting of the compounds represented by formula (1) to (3), which are shown below, may be added to the composition used for forming the optically anisotropic layer, in order to promote aligning the liquid-crystalline molecules horizontally. In the specification, the term "horizontal alignment" means that, regarding rod-like liquid-crystalline molecules, the molecular long axes thereof and a layer plane are parallel to each other, and, regarding discotic liquid-crystalline molecules, the disk-planes of the cores thereof and a layer plane are parallel to each other. However, they are not required to be exactly parallel to each other, and, in the specification, the term "horizontal alignment" should be understood as an alignment state in which molecules are aligned with a tilt angle against a layer plane less than 10 degree. The tilt angle is preferably from 0 to 5 degree, more preferably 0 to 3 degree, much more preferably from 0 to 2 degree, and most preferably from 0 to 1 degree.

The formula (1) to (3) will be described in detail below.

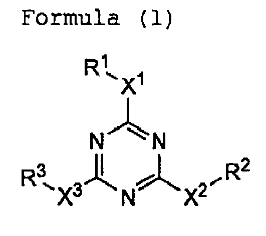

In the formula, R¹, R² and R³ each independently represent a hydrogen atom or a substituent; and X¹, X² and X³ respectively represent a single bond or a divalent linking group. As the substituent represented by each R¹, R² and R³, preferable examples include a substituted or unsubstituted alkyl group (an unsubstituted alkyl group or an alkyl group substituted with fluorine atom is more preferable), a substituted or unsubstituted aryl group (an aryl group having an alkyl group substituted with fluorine atom is more preferable), a substituted or unsubstituted amino group, an alkoxy group, an alkylthio group, and a halogen atom. The divalent linking group represented by each of X¹, X² and X³ may preferably be an alkylene group, an alkenylene group, a divalent aromatic group, a divalent heterocyclic group, -CO-, -NR^{a}- (wherein R^{a} represents a C₁₋₅ alkyl group or hydrogen atom) , -O-, -S-, -SO-,-SO₂-, or a divalent linking group formed by combining two or more groups selected from the above listed groups). The divalent linking group is more preferably a group selected from a group consisting of an alkylene group, phenylene group, -CO-, -NR^{a}-, -O-, -S-, and -SO₂-, or a divalent linking group formed by combining two or more groups selected from the above group. The number of the carbon atoms of the alkylene group is preferably 1 to 12. The number of the carbon atoms of the alkenylene group is preferably 2 to 12. The number of the carbon atoms of the divalent aromatic group is preferably 6 to 10.

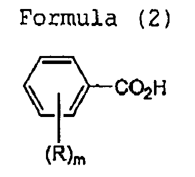

In the formula, R represents a substituent, and m represents an integer of 0 to 5. When m is 2 or more, plural R are same or different to each other. Preferable examples of the substituent represented by R are the same as the examples listed above for each of R¹, R², and R³. m is preferably an integer of 1 to 3, more preferably 2 or 3.

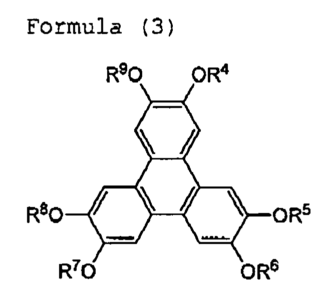

In the formula, R⁴, R⁵, R⁶, R⁷, R⁸ and R⁹ each independently represents hydrogen atom or a substituent. Preferable examples of the substituent represented by each of R⁴, R⁵, R⁶, R⁷, R⁸ and R⁹ are the same as the examples listed above for each of R¹, R², and R³ in the general formula (1).

Examples of the horizontal alignment agent, which can be used in the present invention, include those described in paragraph [0092] to [0096] in Japanese Laid-Open Patent Publication (Tokkai) No. 2005-099248 and the methods for preparing such compounds are also described in the publication.

The amount of the compounds represented by the aforementioned general formula (1) to (3) added is preferably from 0.01 to 20 weight %, more preferably from 0.01 to 10 weight % and much more preferably from 0.02 to 1 weight %. The compounds represented by the aforementioned general formula (1) to (3) may be used singly, or two or more types of them may be used in combination.

### [Solvents used for preparation of coating liquid]

The optically anisotropic layer is preferably formed by directly applying a coating liquid containing a liquid-crystalline compound, a polymerization initiator as described below or other additives to an alignment layer described below, or to an uneven layer as for a negative c-plate optically anisotropic layer. The solvent used for preparing the coating liquid is preferably an organic solvent. Examples of the organic solvent include amides (e.g., N,N-dimethyl formamide), sulfoxides (e.g., dimethyl sulfoxide), heterocyclic compounds (e.g., pyridine), hydrocarbons (e.g., benzene, hexane), alkyl halides (e.g., chloroform, dichloromethane), esters (e.g., methyl acetate, butyl acetate), ketones (e.g., acetone, methyl ethyl ketone) and ethers (e.g., tetrahydrofuran, 1,2-dimethoxyethane). Alkyl halides and ketones are preferred. Two or more organic solvents may be used in combination.

### [Polymerization initiator]

The aforementioned optically anisotropic layer is preferably a layer formed by applying a composition containing a liquid crystal compound (for example a coating liquid) to a surface of an uneven layer or an alignment layer, described later, aligning liquid crystalline molecules as to show a desired liquid crystal phase, and fixing the obtained alignment state under heating or light-irradiating.

Fixing is preferably carried out by the polymerization reaction of the reactive groups introduced to the liquid-crystalline compounds. The polymerization reaction includes thermal polymerization reaction using a thermal polymerization initiator and photo-polymerization reaction using a photo-polymerization initiator. Among them, photo-polymerization reaction is preferred. Examples of photo-polymerization initiator include alpha-carbonyl compounds (described in US Patents Nos. 2,367,661 and 2,367,670), acyloin ethers (described in US Patent No. 2,448,828), alpha -hydrocarbon-substituted aromatic acyloin compounds (described in US Patent No. 2,722,512), polynuclear quinone compounds (described in US Patents Nos. 3,046,127 and 2,951,758), combinations of triarylimidazole dimers and p-aminophenyl ketone (described in US Patent No. 3,549,367), acridine and phenazine compounds (described in Japanese Laid-Open Patent Publication (Tokkai) syo No. 60-105667 and US Patent No. 4,239,850) and oxadiazole compounds (described in US Patent No. 4,212,970).

The amount of the photo-polymerization initiators to be used is preferably 0.01 to 20 % by weight, more preferably 0.5 to 5 % by weight on the basis of solids in the coating liquid. Irradiation for polymerizing the liquid-crystalline molecules preferably uses UV rays. The irradiation energy is preferably 20 mJ/cm² to 10 J/cm², and more preferably 100 to 800 mJ/cm². Irradiation may be carried out in an atmosphere of inert gas such as nitrogen gas and/or under heating to facilitate the photo-polymerization reaction.

### [Alignment Layer]

When the optically anisotropic layer is prepared from a composition containing a liquid crystal compound, an alignment layer may be used. The alignment layer has ability of controlling the alignment of liquid crystalline compounds thereon, and, as far as having such ability, may be selected from various known alignment layers. Preferable examples of the alignment layer include a layer formed by rubbing a layer formed of an organic compound (preferably a polymer), a layer formed by oblique vapor deposition, a layer with microgrooves, a laminated layers formed by deposition of organic compounds (for example, omega-tricosanoic acid, dioctadecylmethylammonium chloride, and methyl stearate) by the Langmuir-Blodgett (LB) film method, and a layer wherein dielectrics are aligned by exposure to an electric or magnetic field.

Examples of the organic compound, which can be used for forming the alignment layer, include polymers such as polymethyl methacrylate, acrylic acid /methacrylic acid copolymer, styrene/maleimide copolymer, polyvinyl alcohol, poly(N-methyrol acrylamide), styrene/vinyl toluene copolymer, chlorosulfonated polyethylene, nitrocellulose, polyvinyl chloride, chlorinated polyolefin, polyester, polyimide, vinyl acetate/ vinyl chloride copolymer, ethylene/vinyl acetate copolymer, carboxymethyl cellulose, polyethylene, polypropylene and polycarbonates; and silane coupling agents. Preferred exampled of the polymer include polyimide, polystyrene, styrene based polymers, gelatin, polyvinyl alcohol and alkyl-modified polyvinyl alcohol having at least one alkyl group (preferably C₆ or longer alkyl group).

For production of an alignment layer, a polymer may preferably used. The types of polymer, which is used for forming the alignment layer, may be decided depending on what types of alignment state of liquid crystal (in particular how large of tilt angle) is preferred. For forming an alignment layer capable of aligning liquid crystalline molecules horizontally, it is required not to lower the surface energy of the alignment layer, and polymer may be selected from typical polymers have been used for alignment layers. Examples of such polymer are described in various documents concerning liquid crystal cells or optical compensation sheets. Polyvinyl alcohols, modified polyvinyl alcohols, poly acrylic acid, acrylic acid/acrylate copolymers, polyvinyl pyrrolidone, cellulose and modified cellulose are preferably used. Materials used for producing the alignment layer may have one or more functional groups capable of reacting with the reactive group of the liquid crystalline compound. The functional group may be introduced by using a repeating unit having such a functional group, or introduced as a substituent of a cyclic group. It is more preferable to use an alignment layer capable of forming a chemical bond with the liquid-crystalline compound at the interface, and a particularly preferable example of such alignment layer is a modified polyvinyl alcohol, described in Japanese Laid-Open Patent Publication "Tokkaihei" No. 9-152509, which has an acrylic group introduced in the side chain thereof using acid chloride or Karenz MOI (product of Showa Denko K.K.). The thickness of the alignment layer is preferably 0.01 to 5 µ m, and more preferably 0.05 to 2 µm. The alignment layer may also have a function as a layer for oxygen shut-off.

Polyimide, preferably fluorine-containing polyimide, films, which have been widely used as an alignment layer for LCD, are also preferable. The film may be formed by applying polyamic acid, provided, for example, as LQ/LX series products by Hitachi Chemical Co., Ltd or as SE series products by NISSAN CHEMICAL INDUSTRIES, LTD, to a surface of the support, heating at 100 to 300 °C for 0.5 to one hour to form a polymer layer, and rubbing a surface of the polymer layer.

The rubbing treatment may be carried out with known techniques which have been employed in the usual step for aligning liquid crystalline molecules of LCD. In particular, the rubbing treatment may be carried out by rubbing a surface of a polymer layer in a direction with paper, gauze, felt, rubber, nylon or polyester fiber or the like. The rubbing treatment may be carried out, for example, by rubbing a surface of a polymer layer in a direction at several times with a cloth having same length and same diameter fibers grafted uniformly.

Examples of the material used in oblique vapor deposition include metal oxides such as SiO₂, which is a typical material, TiO₂ and ZnO₂; fluorides such as MgF₂; metals such as Au and Al. Any high dielectric constant metal oxides can be used in oblique vapor deposition, and, thus, the examples thereof are not limited to the above mentioned materials.

The optically anisotropic layer can also be prepared by a transfer method wherein the liquid crystal compound is aligned on a temporary alignment layer, and after fixing the alignment state, the obtained layer is transferred to a transparent support by using adhesive agent or the like. However, from the viewpoint of productivity, direct formation of the optically anisotropic layer on the substrate without using the transfer method is preferred. Particularly, a negative c-plate optically anisotropic layer that functions as a smoothing layer is preferably formed directly on an uneven layer.

Example of the uneven layer includes a color filter layer and a layer provided with one or more electrodes, black matrices, or through-holes, or the like.

### EXAMPLES

Paragraphs below will more specifically describe the present invention referring to Examples. Any materials, reagents, amount and ratio of use and operations shown in Examples may appropriately be modified without departing from the spirit of the present invention. It is therefore understood that the present invention is by no means limited to specific Examples below.

### (Preparation of Coating Liquid LC-1 for Optically Anisotropic Layer)

The composition below was prepared, filtered through a polypropylene filter having a pore size of 0.2µm, and the filtrates were used as coating liquid LC-1 for forming an optically anisotropic layer.

LC-1-1 was synthesized according to the method described in Japanese Patent Unexamined Publication No. 2001-166147.

LC-1-2 was synthesized according to the method described in Tetrahedron Lett., Vol. 43, p.6793 (2002).

| Composition of Coating Liquid for Optically Anisotropic Layer | (% by weight) |
|---|---|
| discotic liquid crystal compound(LC-1-1) | 30.0 |
| ethylene oxide-modified trimethylol propane triacrylate (V#360, from Osaka Organic Chemical Industry, Ltd.) | 3.3 |
| photopolymerization initiator (IRGACURE 907, Chiba Speciality Chemicals Co., Ltd.) sensitizer | 1.0 |
| (KAYACURE DETX from Nippon Kayaku Co., Ltd.) | 0.33 |
| horizontal orientation agent (LC-1-2) | 0.27 |
| methyl ethyl ketone | 65.1 |

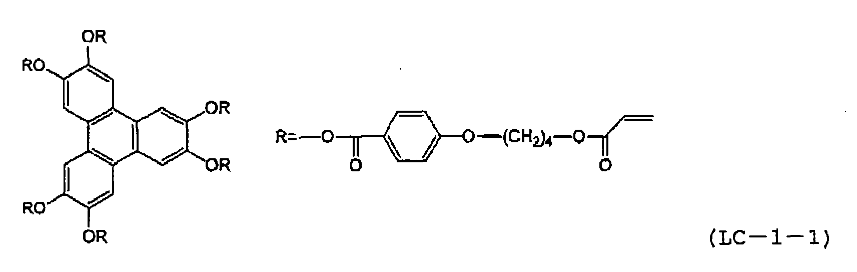

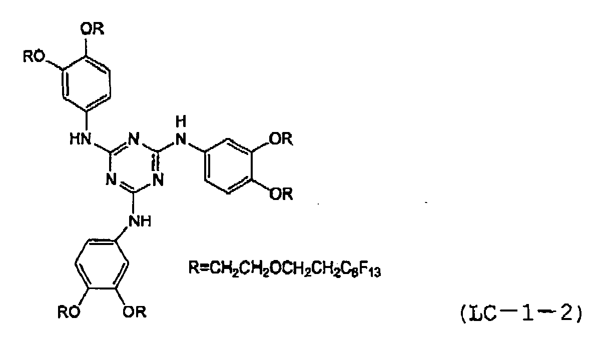

### (Preparation of Coating Liquid LC-2 for Optically Anisotropic Layer)

The composition below was prepared, filtered through a polypropylene filter having a pore size of 0.2µm, and the filtrates were used as coating liquid LC-2 for forming an optically anisotropic layer.

LC-2-1 was synthesized according to the method described in WO93/22397.

| Composition of Coating Liquid for Optically Anisotropic Layer | (% by weight) |
|---|---|
| rod-like liquid crystal (LC-2-1) | 31.93 |
| horizontal orientation agent (LC-1-2) | 0.07 |
| radical photopolymerization initiator (IRGACURE907, Chiba Speciality Chemicals Co., Ltd.) | 1.00 |
| photopolymerization promoter (Kayacure DETX-S, from Nippon Kayaku Co., Ltd.) | 0.33 |
| methyl ethyl ketone | 66.67 |

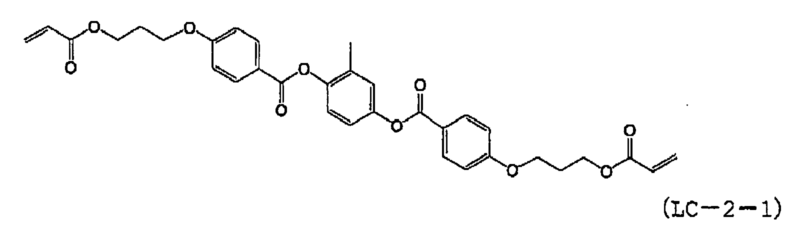

### <Example 1>

### (Preparation of color filter substrate)

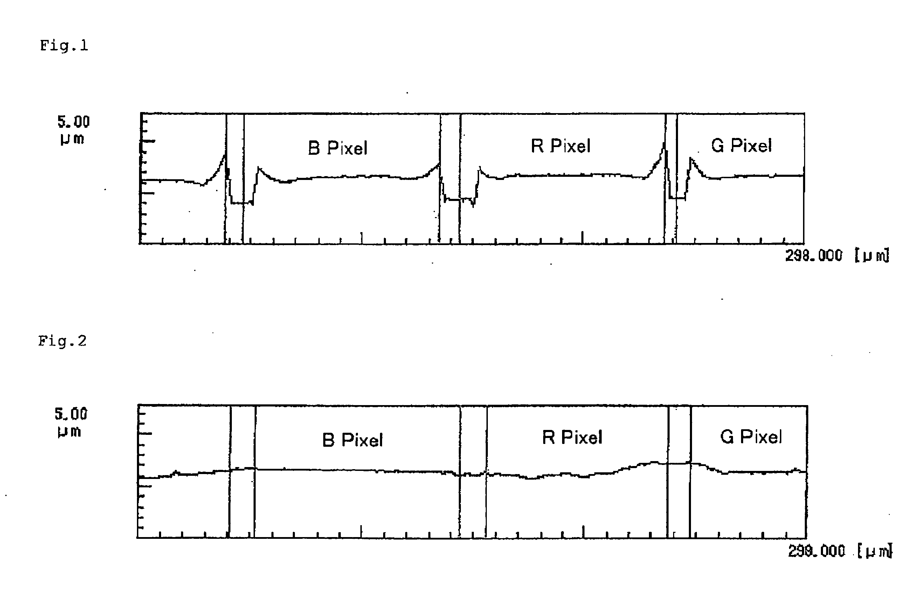

A color filter substrate having black matrix and color filters of RGB three-color on a glass substrate was prepared by using "transer" system described on page 25 of FUJIFILM RESEARCH & DEVELOPMENT No.44(1999). The obtained color filter substrate was subjected to a measurement of unevenness by using a laser microscope (product of KEYENCE Co., Ltd.). The result of the measurement of unevenness in Fig. 1 shows that unevenness of about 1.5 µm is present at the edge of each pixel.

### (Formation of the first optically anisotropic layer)

The coating liquid for optically anisotropic layer, LC-1, was applied on the above color filter substrate by spin coating, heated and matured at 125°C on the surface of the film for 3 minutes, to thereby obtain a layer of a uniform liquid crystal phase. The coated layer was then illuminated in the air atmosphere by ultraviolet radiation by using a 160 W/cm, air-cooled metal halide lamp (product of Eyegraphics Co., Ltd.) at luminance of 400 mW/cm², and irradiation energy of 300 mJ/cm² so as to fix the alignment state of the phase to thereby obtain the first optically anisotropic layer of Example 1.

The obtained optically anisotropic substrate was subjected to a measurement of unevenness by using a laser microscope (product of KEYENCE Co., Ltd.). The result of the measurement of unevenness in Fig. 2 shows that the optically anisotropic layer reduces the unevenness at the edge of each pixel and therefore functions as a smoothing layer.

### (Formation of the second optically anisotropic layer)

The coating liquid for alignment layer A1-1 (RN1199A, a product of Nissan Chemical Industries, Ltd.) was applied on the color filter substrate and dried to be baked at 220°C for one hour to obtain an alignment layer. The thickness of the substrate after baking was 60 nm.

The alignment layer was subjected to a rubbing treatment and then coated with the coating liquid for optically anisotropic layer, LC-2. The coated layer was dried under heating at 105°C on the surface of the film for 2 minutes, to thereby obtain a layer of a liquid crystal phase. The layer was then illuminated in the air atmosphere by ultraviolet radiation by using a 160 W/cm, air-cooled metal halide lamp (product of Eyegraphics Co., Ltd.) at luminance of 400 mW/cm², and irradiation energy of 300 mJ/cm² so as to fix the alignment state of the phase to thereby obtain a 1.2-µm-thick second optically anisotropic layer to produce a substrate for liquid crystal display device of Example 1.

### <Example 2>

### (Preparation of Substrate 1 for measurement of retardation)

For a measurement of the retardation of the optically anisotropic layer of the present invention, each optically anisotropic layer prepared in the same way as above except that the layers were prepared on a glass substrate instead of the color filter substrate was used.

A non-alkali glass substrate was cleaned using a rotating nylon-haired brush while spraying a glass cleaner solution conditioned at 25°C by a shower for 20 seconds. After showered with purified water, the substrate was then heated in a substrate preheating heater at 100°C for 2 minutes. Substrate 1 for measurement of retardation of Example 2 was prepared in the same manner as that of the formation of the first optically anisotropic layer of Example 1 on the above glass substrate.

### <Example 3>

### (Preparation of Substrate 2 for measurement of retardation)

An alignment layer was prepared in the same manner to that of Example 2 on a non-alkali glass substrate. The alignment layer was subjected to a rubbing treatment, and on the rubbed surface, Substrate 2 for measurement of retardation of Example 3 was prepared in the same manner as that of the formation of the second optically anisotropic layer of Example 1

### (Measurement of Retardation)

Frontal retardation at wavelength 550 nm, Re (0), and each of retardations Re (40) and Re (-40) wherein the sample is inclined by +40° and -40° using the slow axis as the axis of rotation were measured using a fiber-type spectrometer based on the parallel Nicol method. Results of the retardation measurements of Substrate 1 for measurement of retardation (Example 2) and Substrate 2 for measurement of retardation (Example 3) are shown in Table 1.

**Table 1**

| Sample | Re (0) | Re (40) | Re (-40) |
|---|---|---|---|
| Substrate 1 for measurement of retardation (Example 2) | 0.0 | 32.2 | 31.6 |
| Substrate 2 for measurement of retardation (Example 3) | 135.8 | 132.9 | 122.4 |

### (Example 4: Production of VA-mode Liquid Crystal Display Device)

On the substrate for liquid crystal display device of Example 1 and, as the opposing substrate, a glass substrate having a TFT layer provided thereon, a transparent electrode film was provided by sputtering of an ITO and further thereon, a polyimide orientation film was provided. An epoxy polymer sealing material containing spacer grains was printed at positions corresponding to the outer contour of the black matrix provided around the pixel group of the color filter. The opposing substrate and the substrate for liquid crystal display device of Example 1 were attached to each other under a pressure of 10 kg/cm. The glass substrates thus attached were then annealed at 150°C for 90 minutes so as to allow the sealing material to cure, and thereby a stack of two glass substrates was obtained. The stack of the glass substrates was degassed in vacuo, and a liquid crystal was introduced therebetween by recovering the atmospheric pressure, to thereby obtain a liquid crystal cell. On both surfaces of the liquid crystal cell, polarizer plates HLC2-2518 from Sanritz Corporation were respectively attached. A three-band-phosphor-type white fluorescent lamp having an arbitrary color tone was produced as a cold-cathode-tube back light for color liquid crystal display device, using a phosphor composed of a 50:50 mixture on the weight basis of BaMg₂Al₁₆O₂₇:Eu,Mn and LaPO₄:Ce,Tb for green (G), Y₂C₃:Eu for red (R), and BaMgAl₁₀O₁₇:Eu for blue (B). The above-described liquid crystal cell having the polarizer plates bonded thereto was disposed on this back light, to thereby produce liquid crystal display device of Example 4.

### (Comparative Example 1: Production of VA-mode Liquid Crystal Display Device)

Liquid crystal display device of Comparative Example 1 was prepared in the same manner as that of Example 4 except that the above color substrate as it is was used instead of the substrate for liquid crystal display device of Example 1.

### <Example 5>

### (Preparation of Coating Liquid LC-3 for Optically Anisotropic Layer)

The composition below was prepared, filtered through a polypropylene filter having a pore size of 0.2µm, and the filtrates were used as coating liquid LC-3 for forming an optically anisotropic layer.

LC-3-1 was synthesized according to the method described in Japanese Laid-Open Patent Publication "Tokkai" No. 2004-123882.

| Composition of Coating Liquid for Optically Anisotropic Layer LC-3 | (% by weight) |
|---|---|
| rod-like liquid crystal (LC-3-1) | 19.57 |
| horizontal orientation agent (LC-1-2) | 0.01 |
| cationic photopolymerization initiator (Cyracure UVI6974 from Dow Chemical Company) | 0.40 |
| polymerization control agent (IRGANOX1076, Chiba Speciality Chemicals Co., Ltd.) | 0.02 |
| methyl ethyl ketone | 80.00 |

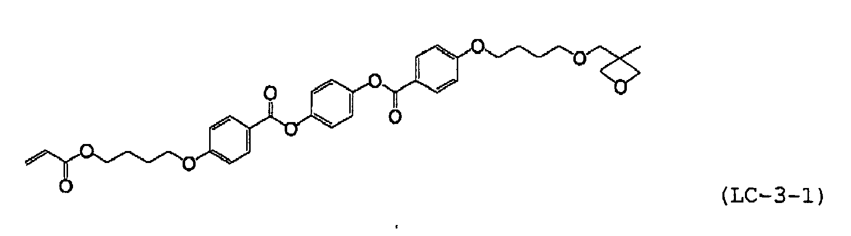

### (Preparation of Coating Liquid LC-4 for Optically Anisotropic Layer)

The composition below was prepared, filtered through a polypropylene filter having a pore size of 0.2µm, and the filtrates were used as coating liquid LC-4 for forming an optically anisotropic layer.

| Composition of Coating Liquid for Optically Anisotropic Layer LC-4 | (% by weight) |
|---|---|
| random copolymer of benzyl methacrylate/methacrylic acid/methyl methacrylate (copolymerization ratio (molar ratio)= 35.9/22.4/41.7, weight-average molecular weight=38,000) | 8.05 |
| KAYARAD DPHA (from Nippon Kayaku Co., Ltd.) | 4.83 |
| radical polymerization initiator (2-trichloromethyl-5-(p-styrylstyryl)-1,3,4-oxadiazole) | 0.12 |
| hydroquionone monomethyl ether | 0.002 |
| Megafac F-176-PF (from Dainippon Ink and Chemicals, Inc.) | 0.05 |
| propylene glycol monomethyl ether acetate | 34.80 |
| methyl ethyl ketone | 50.538 |
| methanol | 1.61 |

### (Preparation of Substrate for Liquid Crystal Display Device)

The first optically anisotropic layer was formed on the above color filter substrate in a similar manner to that of Example 1. Further, an alignment layer was formed on the first optically anisotropic layer in a similar manner to that of Example 1. The alignment layer was then subjected to a rubbing treatment.

The alignment layer was then coated with the coating liquid for optically anisotropic layer LC-3. The coated layer was dried under heating at 105°C on the surface of the film for 2 minutes, to thereby obtain a layer of a liquid crystal phase. The layer was then illuminated in the air atmosphere by ultraviolet radiation by using a 160 W/cm, air-cooled metal halide lamp (product of Eyegraphics Co., Ltd.) at luminance of 240 mW/cm², and irradiation energy of 600 mJ/cm² so as to fix the alignment state of the phase to thereby obtain a 1.8-µm-thick second optically anisotropic layer. Further, on the second optically anisotropic layer, the coating liquid for optically anisotropic layer LC-4 was applied and dried to obtain a 1.0-µm-thick layer. The layer in this state was subjected to UV exposure in a pattern making manner, using a proximity-type exposure apparatus having an extra-high-voltage mercury lamp (product of Hitachi Electronics Engineering Co., Ltd.), wherein the substrate and a mask (quartz-made photomask having an image pattern formed thereon) were vertically held while keeping a distance between the surface of the photomask and the above layer consisting of LC-4 of 200 µm away from each other, so that the exposure energy were 25 mJ/cm² for red patterned region, 22 mJ/cm² for green patterned region, and 16 mJ/cm² for blue patterned region. Subsequently, the substrate was baked in a muffle furnace at 230°C for one hour to obtain a third optically anisotropic layer having a retardation pattern corresponding to the colors indicated by the color filter, and consequently obtain a substrate for liquid crystal display device of Example 5.

### <Comparative Example 2>

An alignment layer was directly formed on the above color filter substrate in a similar manner to that of Example 1. After a rubbing treatment of the obtained alignment layer, optically anisotropic layers using the coating liquid for optically anisotropic layer LC-3 and the coating liquid for optically anisotropic layer LC-4 were formed in a similar manner to that of Example 5. Further on the optically anisotropic layers, the optically anisotropic layer using the coating liquid for optically anisotropic layer LC-1 was formed in a similar manner to that of Example 1, to obtain a substrate for liquid crystal display device of Comparative Example 2.

### <Example 6>

### (Preparation of Substrate 3 for measurement of retardation)

On a non-alkali glass substrate, an alignment layer was directly formed in a similar manner to that of Example 1. The glass substrate with an alignment layer formed thereon was then subj ected to a rubbing treatment. On the above substrate, optically anisotropic layers using the coating liquid for optically anisotropic layer LC-3 and the coating liquid for optically anisotropic layer LC-4 were formed in a similar manner to that of Example 5, except the patterned exposure was not conducted. The substrate thus obtained was subjected to UV exposure using a proximity-type exposure apparatus having an extra-high-voltage mercury lamp (product of Hitachi Electronics Engineering Co., Ltd.) without mask. Three types of substrates were prepared by using the exposure energy of 25 mJ/cm², 22 mJ/cm², and 16 mJ/cm² respectively for each substrate. Subsequently, each substrates were baked in a muffle furnace at 230°C for one hour to obtain Substrate for measurement of retardation 3-R, Substrate for measurement of retardation 3-G, and Substrate for measurement of retardation 3-B.

### (Measurement of Retardation)

Measurement of retardation was conducted for Substrate for measurement of retardation 3-R, Substrate for measurement of retardation 3-G, and Substrate for measurement of retardation 3-B. Results of the retardation measurements are shown in Table 2.

**Table 2**

| Sample | Re (0) | Re (40) | Re (-40) |
|---|---|---|---|
| Substrate for measurement of retardation 3-R | 153.0 | 142.4 | 145.2 |
| Substrate for measurement of retardation 3-G | 135.4 | 130.3 | 124.3 |
| Substrate for measurement of retardation 3-B | 110.2 | 103.8 | 103.4 |

### (Example 7, Comparative Example 3: Production of VA-mode Liquid Crystal Display Device)

Liquid crystal display device of Example 7 was prepared in the same manner as that of Example 4 except that the substrate for liquid crystal display device of Example 5 was used instead of the substrate for liquid crystal display device of Example 1.

Liquid crystal display device of Comparative Example 3 was prepared in the same manner as that of Example 4 except that the substrate for liquid crystal display device of Comparative Example 2 was used instead of the substrate for liquid crystal display device of Example 1.

### <Example 8>

### (Preparation of Coating Liquid LC-5 for Optically Anisotropic Layer)

The composition below was prepared, filtered through a polypropylene filter having a pore size of 0.2µm, and the filtrates were used as coating liquid LC-5 for forming an optically anisotropic layer.

| Composition of Coating Liquid for Optically Anisotropic Layer LC-5 | (% by weight) |
|---|---|
| polyimide (LC-5-1) | 10.00 |
| methyl ethyl ketone | 90.00 |

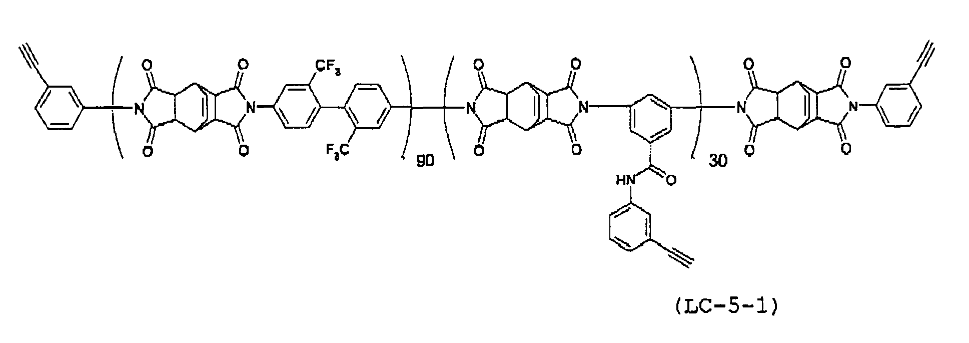

A substrate for liquid crystal display device of Example 8 was obtained in a similar manner to that of Example 5 except that the coating liquid for optically anisotropic layer LC-5 was used instead of the coating liquid for optically anisotropic layer LC-1, and calcination at 230°C for one hour was conducted after the coating and drying. The thickness of the optically anisotropic layer formed of LC-5 was 6.5µm.

### <Comparative Example 4>

A substrate for liquid crystal display device of Comparative Example 4 was obtained in a similar manner to that of Comparative Example 2 except that the coating liquid for optically anisotropic layer LC-5 was used instead of the coating liquid for optically anisotropic layer LC-1, and calcination at 230°C for one hour was conducted after the coating and drying. The thickness of the optically anisotropic layer formed of LC-5 was 6.5µm.

### (Example 9, Comparative Example 5: Production of VA-mode Liquid Crystal Display Device)

Liquid crystal display device of Example 9 was prepared in the same manner as that of Example 4 except that the substrate for liquid crystal display device of Example 8 was used instead of the substrate for liquid crystal display device of Example 1.

Liquid crystal display device of Comparative Example 5 was prepared in the same manner as that of Example 4 except that the substrate for liquid crystal display device of Comparative Example 4 was used instead of the substrate for liquid crystal display device of Example 1.

### <Example 10>

### (Preparation of Coating Liquid LC-6 for Optically Anisotropic Layer)

Trans-1,4-diaminocyclohexane(10.96g), bis (3- aminopropyl) tetramethyldisiloxane(0.99 g) was dissolved in N-methyl-2-pyrrolidone (177.28 g) under current of dry nitrogen. The solution was then added with 3,3',4,4'-biphenyltetracarboxylic dianhydride (28.25g) and N-methyl-2-pyrrolidone (40.00 g), and stirred at 60°C for 3 hours. The solution was further added with phthalic anhydride (1.18 g) and then stirred at 60°C for 3 hours to obtain a clear and viscous polyamic acid solution. The solution was filtered through a polypropylene filter having a pore size of 0.2µm, and the filtrates were used as coating liquid LC-6 for forming an optically anisotropic layer.

A substrate for liquid crystal display device of Example 10 was obtained in a similar manner to that of Example 5 except that the coating liquid for optically anisotropic layer LC-6 was used instead of the coating liquid for optically anisotropic layer LC-1, drying after the application of the coating liquid for optically anisotropic layer LC-6 was conducted at 120°C for 20 minutes, and then calcination at 240°C for 30 minutes was conducted. The thickness of the optically anisotropic layer formed of LC-6 was 2.0µm.

### <Comparative Example 6>

A substrate for liquid crystal display device of Comparative Example 6 was obtained in a similar manner to that of Comparative Example 2 except that the coating liquid for optically anisotropic layer LC-6 was used instead of the coating liquid for optically anisotropic layer LC-1, drying after the application of the coating liquid for optically anisotropic layer LC-6 was conducted at 120°C for 20 minutes, and then calcination at 240°C for 30 minutes was conducted. The thickness of the optically anisotropic layer formed of LC-6 was 2.0µm.

### (Example 11, Comparative Example 7: Production of VA-mode Liquid Crystal Display Device)

Liquid crystal display device of Example 11 was prepared in the same manner as that of Example 4 except that the substrate for liquid crystal display device of Example 10 was used instead of the substrate for liquid crystal display device of Example 1.

Liquid crystal display device of Comparative Example 7 was prepared in the same manner as that of Example 4 except that the substrate for liquid crystal display device of Comparative Example 6 was used instead of the substrate for liquid crystal display device of Example 1.

### <Example 12>

A substrate for liquid crystal display device of Example 12 was prepared in a similar manner to that of Example 5 except that a glass substrate provided with a TFT layer was used instead of the color filter substrate.

### <Comparative Example 8>

A substrate for liquid crystal display device of Comparative Example 8 was obtained in a similar manner to that of Comparative Example 2 except that a glass substrate provided with a TFT layer was used instead of the color filter substrate.

### (Example 13, Comparative Example 9: Production of VA-mode Liquid Crystal Display Device)

Liquid crystal display device of Example 13 was prepared in the same manner as that of Example 4 except that the substrate for liquid crystal display device of Example 12 and the above color filter substrate as an opposed substrate were used.

Liquid crystal display device of Comparative Example 9 was prepared in the same manner as that of Example 4 except that the substrate for liquid crystal display device of Comparative Example 8 and the above color filter substrate as an opposed substrate were used.

Results of visual observation of liquid crystal display devices of Example 4, 7, 9, 11, 13, and Comparative Example 1, 3, 5, 7, 9 in a black state (under no applied voltage) at viewing angle of 45° upper-rightward direction are shown in Table 3.

**Table 3**

| Sample | Results of Visual Observation |
|---|---|
| Example 4 | Small viewing angle dependence of contrast, showing almost no sensible color shift in the black state |
| | |
| Example 7 | Very small viewing angle dependence of contrast, showing no sensible color shift in the black state |
| | |
| Example 9 | Very small viewing angle dependence of contrast, showing no sensible color shift in the black state |
| | |
| Example 11 | Very small viewing angle dependence of contrast, showing no sensible color shift in the black state |
| | |
| Example 13 | Very small viewing angle dependence of contrast, showing no sensible color shift in the black state |
| | |
| Comparative Example 1 | Significant light leakage in frontal and oblique directions, showing sensible color shift in the black state |
| | |
| Comparative Example 3 | Light leakage in frontal direction, but showing almost no sensible color shift in the black state |
| | |
| Comparative Example 5 | Light leakage in frontal direction, but showing almost no sensible color shift in the black state |
| | |
| Comparative Example 7 | Light leakage in frontal direction, but showing almost no sensible color shift in the black state |
| | |
| Comparative Example 9 | Light leakage in frontal direction, but showing almost no sensible color shift in the black state |

### Industrial Applicability

In the substrate for liquid crystal display device of the present invention, a smoothing layer is formed of optically anisotropic materials. Therefore, the substrate for liquid crystal display device of the present invention has advantages that number of steps of the production can be reduced and thereby can reduce production cost, and contributes to reducing viewing angle dependence of contrast of a VA-mode liquid crystal display device.

## Claims

1. A substrate for liquid crystal display device comprising a smoothing layer,
the smoothing layer being a negative uniaxial optically anisotropic layer having an optical axis in the direction normal to the substrate surface.

2. The substrate for liquid crystal display device according to claim 1, comprising a color filter layer and/or an electrode, and
the smoothing layer being formed directly on the color filter layer or the electrode.

3. The substrate for liquid crystal display device according to claim 1 or 2,
the optically anisotropic layer being a layer formed by coating with a solution comprising a liquid crystalline compound having a least one reactive group, and drying of the solution to thereby form a liquid crystal phase, and then applying heat to the liquid crystal phase or irradiating the liquid crystal phase.

4. The substrate for liquid crystal display device according to claim 3,
the liquid crystalline compound being a discotic liquid crystalline compound.

5. The substrate for liquid crystal display device according to claim 3,
the optically anisotropic layer comprising a polyimide material.

6. The substrate for liquid crystal display device according to any one of claims 1 to 5, comprising a positive uniaxial optically anisotropic layer having an optical axis of in-plane direction of substrate surface.

7. The substrate for liquid crystal display device according to claim 6,
the positive uniaxial optically anisotropic layer being formed directly on the smoothing layer.

8. The substrate for liquid crystal display device according to claim 6 or 7 comprising a color filter, and
the positive uniaxial optically anisotropic layer having retardations in a patterned manner corresponding to colors indicated by the color filter.

9. The substrate for liquid crystal display device according to any one of claims 6 to 8,
the positive uniaxial optically anisotropic layer being a layer formed by coating with a solution comprising a liquid crystalline compound having a least one reactive group, and drying of the solution to thereby form a liquid crystal phase, and then applying heat to the liquid crystal phase or irradiating the liquid crystal phase.

10. The substrate for liquid crystal display device according to claim 9,
the reactive group being a radically polymerizable group or a cationically polymerizable group.

11. The substrate for liquid crystal display device according to claim 9,
the liquid crystalline compound having a least one radically polymerizable group and a least one cationically polymerizable group.

12. The substrate for liquid crystal display device according to claim 10 or 11,
the radically polymerizable group being selected from the group consisting of acrylic group and methacrylic group, and
the cationically polymerizable group being selected from the group consisting of vinyl ether group, oxetanyl group, or epoxy group.

13. A liquid crystal display device having the substrate for liquid crystal display device according to any one of claims 1 to 12.

14. The liquid crystal display device according to claim 13, employing VA mode as a liquid crystal orientation mode.
